# EUROPEAN PATENT SPECIFICATION

(11) **EP 4 153 944 B1**
(45) Date of publication and mention of the grant of the patent: **17.07.2024**
(21) Application number: 20825339.3
(22) Date of filing: 22.11.2020
(51) Int. Cl.: G01C 21/34

(54) **ROUTING AUTONOMOUS VEHICLES BASED ON LANE-LEVEL PERFORMANCE**
ROUTEN VON AUTONOMEN FAHRZEUGEN AUF BASIS DER LEISTUNG AUF SPUREBENE
ACHEMINEMENT DE VÉHICULES AUTONOMES FONDÉ SUR UNE PERFORMANCE DE NIVEAU DE VOIE

(30) Priority: 19.05.2020 US 202016877978
(43) Date of publication of application: 29.03.2023
(73) Proprietor: GM Cruise Holdings LLC, San Francisco, CA 94107 (US)
(72) Inventor: RIZK, Sarah, San Francisco, CA 94103 (US); GARCIA, Zachary, Wright, San Francisco, CA 94103 (US); XIE, Chen, San Francisco, CA 94103 (US); KHAWAM, John, Habeb, San Francisco, CA 94103 (US); BHARADWAJ, Varun, San Francisco, CA 94103 (US); ROLAND, Christopher, Brian, San Francisco, CA 94103 (US); PAVESI, Riccardo, San Francisco, CA 94103 (US); GARG, Anmol, San Francisco, CA 94103 (US); RAO, Anusha, Sridhar, San Francisco, CA 94103 (US); MATLACK, Charles, Bruce, San Francisco, CA 94103 (US); RUSIGNOLA, Michael, San Francisco, CA 94103 (US)
(74) Representative: Berkenbrink, Kai-Oliver
(86) International application number: PCT/US2020/061702
(87) International publication number: WO 2021/236153

(56) References cited:
- US-A1- 2015 345 966
- US-A1- 2018 004 211
- US-A1- 2019 294 167
- US-A1- 2020 116 515

## Description

### CROSS-REFERENCE TO RELATED APPLICATION(S)

This application claims the benefit of and priority from U.S. Patent Application Serial No. 16/877,978, filed May 19, 2020, entitled "ROUTING AUTONOMOUS VEHICLES BASED ON LANE-LEVEL PERFORMANCE".

### TECHNICAL FIELD

The present disclosure relates generally to autonomous driving and, more specifically, to methods and systems for routing autonomous vehicles based on predicted performance at the lane level.

### BACKGROUND

Navigation systems determine routes for autonomous vehicles (AVs) based on one or more objectives. For example, a navigation system may choose a route from an origin point to a destination point that the navigation system expects to be the fastest or that minimizes distance traveled. Navigation systems may also consider other AV performance objectives, and avoid roads or areas that have low performance when possible. For example, some roadways or neighborhoods are classified as being lower performance based on, for example, high collision rates, unpredictable traffic patterns, low visibility, or other conditions that make roads more difficult or dangerous for the AV to navigate. Based on this data, AV navigation systems attempt to avoid roads or areas that have known hazards. Documents US 2020/116515 A1, US 2018/004211 A1, and US 2015/345966 A1 disclose known methods for determining optimal lane-level routes for autonomous vehicles.

### SUMMARY

The present invention is defined in the independent claims. The dependent claims define the advantageous embodiments thereof.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIG. 1 is a block diagram illustrating a system including an example AV in which lane-level routing according to some embodiments of the present disclosure may be implemented;
FIG. 2 illustrates a first set of candidate lanes according to some embodiments of the present disclosure;
FIG. 3 illustrates a second set of candidate lanes according to some embodiments of the present disclosure; and
FIG. 4. is a block diagram illustrating a fleet management system according to some embodiments of the present disclosure;
FIG. 5 is a block diagram illustrating an onboard computer according to some embodiments of the present disclosure;
FIG. 6 illustrates a flow diagram showing a process for selecting a route for an AV according to some embodiments of the present disclosure.

### DESCRIPTION OF EXAMPLE EMBODIMENTS OF THE DISCLOSURE

### Overview

The systems, methods and devices of this disclosure each have several innovative aspects, no single one of which is solely responsible for all of the desirable attributes disclosed herein. Details of one or more implementations of the subject matter described in this specification are set forth in the description below and the accompanying drawings.

As AV systems are being developed, human drivers ride in the AVs and are able to take over and manually override self-driving behavior. For example, if a human driver believes that the AV, operating in self-driving mode, may make an unsafe maneuver or cause an accident, the human driver can manually take over operation of the AV. At the neighborhood-level and roadway-level, takeover data is useful in predicting the performance of an AV traveling a particular route. For example, if a particular roadway has a low rate of manual takeovers by drivers, the AV system can infer that this is a high performance road, e.g., a road that the AV can easily navigate, without major obstacles or other challenges. By contrast, if a particular roadway has a high rate of manual takeovers, the AV system can infer that this is a low performance road, e.g., a road that the AV has more challenging navigating, or a road that has unpredictable traffic or other obstacles that are difficult for the AV to plan for. Additional data that can predict AV performance includes data describing collision rates along roadways or within neighborhoods, data describing the movements of the AVs along various roadways (e.g., quick accelerations or decelerations indicating sudden AV movements indicating a lower performance road).

Many roadways have multiple lanes on which the AV can travel. Certain roadways have a consistent performance across the road, e.g., a road on a steep hill may have low performance across all lanes due to poor visibility. However, many roadways have lane-specific conditions that make a particular lane easier or more difficult for the AV to navigate. For example, if two unprotected turn lanes are available, and one has a visual obstruction blocking the view of oncoming traffic whereas visibility from the other lane is not obstructed, the non-obstructed turn lane has a higher performance than the obstructed turn lane. As another example, if two adjacent lanes are available to travel down a roadway, and the right lane is next to a highly used bicycle lane, the left lane may have a higher performance than the right lane.

As used herein, a lane is a portion of a roadway along which an AV can travel. A lane may be described by its boundaries, including a left boundary and a right boundary, and a direction of travel. In one example, a lane comprises a portion of a roadway physically marked by painted lane lines, a median, reflective markers, or other demarcations. In another example, a lane comprises a portion of a roadway on which AVs travel by convention, e.g., the right-hand portion of a two-way street without a lane demarcation. In another example, a lane comprises the full width of a roadway, e.g., for a single lane road. A lane may have start points and end points, e.g., a lane may start at one end of a given city block and end at the other end of the city block; a corresponding lane on the next city block may be considered a different lane, or a continuation of the same lane. A lane may extend through an intersection, or a portion of a roadway through an intersection may be considered a distinct lane from a corresponding portion before the intersection. In some examples, multiple lanes overlap. For example, at an intersection, each potential pathway for traveling through the intersection, including straight pathways and turning pathways, is considered a lane. As another example, in a rural area, a single lane road may allow travel in two directions, and the full width of the road in either direction of travel is considered a separate lane.

In some embodiments, an AV system uses lane-level data to predict performance of multiple candidate lanes. The AV system selects the candidate lane with the higher predicted performance for routing the AV. For example, the AV system may select between two adjacent lanes based on which lane has a higher predicted performance. As another example, the AV system may select between multiple lanes on different roadways based on the lanes' predicted performances (e.g., a first left turn lane on one road, and a second left turn lane on a parallel road), and determine a route for the AV based on the selected lane.

In some embodiments, the AV system collects lane-level performance data from a fleet of AVs. If enough lane-level performance data has been captured for a given candidate lane to provide an accurate performance prediction, the AV system may use the collected performance data for the given candidate lane to compare the given candidate lane to other candidate lanes. In some cases, the AV system may not have collected sufficient data for a given candidate lane to accurately predict performance of that lane, e.g., if the lane is infrequently used by the AV fleet, or if the road or lane is newly constructed. In this situation, the AV system may determine performance data for a lane grouping that includes the candidate lane and other similar lanes. For example, the AV system may aggregate performance data for a group of lanes that have an adjacent high-traffic bicycle lane, and determine a predicted performance that describes lanes in the group. Grouping lanes with common features enables the AV system to provide statistically significant performance predictions for lanes with sparse performance data. The AV system may store a mapping database that includes a variety of data describing lanes, such as lane geometry (e.g., width, grade, curvature), permitted maneuver type or types, lane usage (e.g., traffic levels, types of traffic), and environmental data (e.g., visual or physical obstructions, adjacent lanes, other adjacent features). The AV system may use a clustering algorithm, a decision tree algorithm, or another type of supervised or unsupervised learning method to determine groups of lanes with similar performance based on performance data collected across the fleet and lane-level data in the mapping database.

Embodiments of the present disclosure provide a method for selecting a route for an AV, and a computer-readable medium for performing the method. The method includes identifying within a map database storing data describing a set of connected roadways each having one or more lanes, a plurality of candidate lanes for routing the AV; retrieving from the map database, at least one parameter of each of the plurality of candidate lanes; determining a performance metric for each of the plurality of candidate lanes, the performance metric for a given candidate lane based on the retrieved at least one parameter of the given candidate lane; and selecting a candidate lane of the plurality of candidate lanes for routing the AV based at least in part on the performance metrics for the plurality of candidate lanes, wherein the performance metric for a lane reflects an expected driving performance of the vehicle when autonomously navigating the lane, and wherein determining the performance metric for a given candidate lane comprises: identifying, based on the at least one parameter for the given candidate lane, a lane group comprising the given candidate lane and at least one non-candidate lane, the at least one non-candidate lane having a parameter matching at least one of the parameters of the given candidate lane; and determining the performance metric of the lane group, the performance metric based on data describing previous trips by AVs along the non-candidate lanes in the lane group.

Embodiments of the present disclosure provide a system comprising a map database and a navigation system. The map database stores data describing a set of connected roadways each having one or more lanes. The navigation system is configured to identify, in the map database, a plurality of candidate lanes for routing the AV; retrieve, from the map database, at least one parameter of each of the plurality of candidate lanes; determine a performance metric for each of the plurality of candidate lanes, the performance metric for a given candidate lane based on the retrieved at least one parameter of the given candidate lane; and select a candidate lane of the plurality of candidate lanes for routing the AV based at least in part on the performance metrics for the plurality of candidate lanes.

As will be appreciated by one skilled in the art, aspects of the present disclosure, in particular aspects of lane-level performance prediction and routing, described herein, may be embodied in various manners (e.g., as a method, a system, a computer program product, or a computer-readable storage medium). Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by one or more hardware processing units, e.g. one or more microprocessors, of one or more computers. In various embodiments, different steps and portions of the steps of each of the methods described herein may be performed by different processing units. Furthermore, aspects of the present disclosure may take the form of a computer program product embodied in one or more computer-readable medium(s), preferably non-transitory, having computer-readable program code embodied, e.g., stored, thereon. In various embodiments, such a computer program may, for example, be downloaded (updated) to the existing devices and systems (e.g. to the existing perception system devices and/or their controllers, etc.) or be stored upon manufacturing of these devices and systems.

The following detailed description presents various descriptions of specific certain embodiments. However, the innovations described herein can be embodied in a multitude of different ways, for example, as defined and covered by the claims and/or select examples. In the following description, reference is made to the drawings where like reference numerals can indicate identical or functionally similar elements. It will be understood that elements illustrated in the drawings are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions must be made to achieve the developer's specific goals, including compliance with system, business, and/or legal constraints, which may vary from one implementation to another. Moreover, it will be appreciated that, while such a development effort might be complex and time-consuming; it would nevertheless be a routine undertaking for those of ordinary skill in the art having the benefit of this disclosure.

In the Specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above", "below", "upper", "lower", "top", "bottom", or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature, length, width, etc.) of an element, operations, and/or conditions, the phrase "between X and Y" represents a range that includes X and Y.

As described herein, one aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

Other features and advantages of the disclosure will be apparent from the following description and the claims.

### Example System for Lane-Level Routing

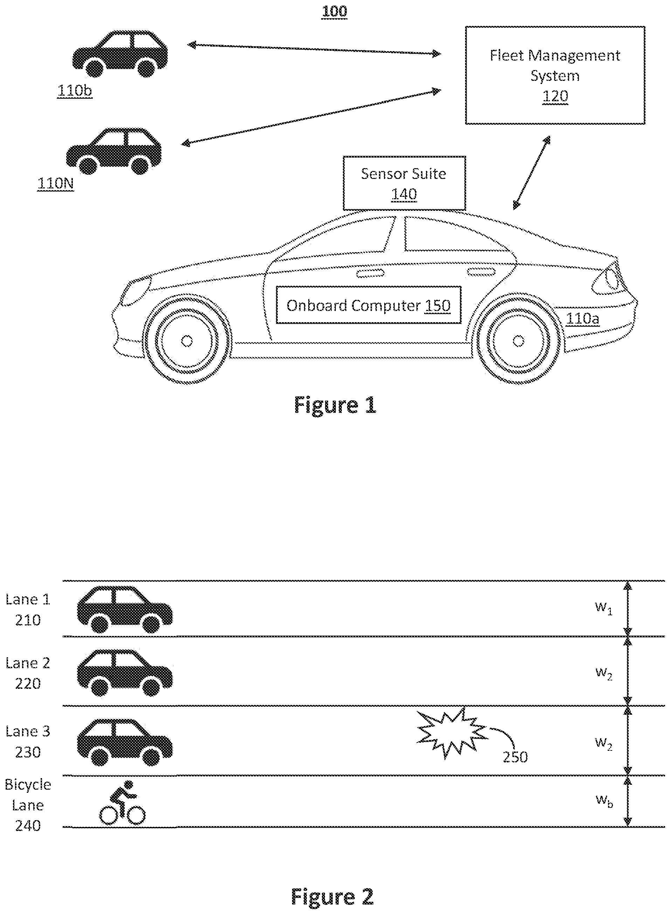

FIG. 1 is a block diagram illustrating a system 100 including an example AV in which lane-level routing according to some embodiments of the present disclosure may be implemented. The system 100 includes a fleet of autonomous vehicles (AVs) 110, including AV 110a, AV 110b, and AV 110N, and a fleet management system 120. For example, a fleet of AVs may include a number N of AVs, e.g., AV 110a through AV 110N. AV 110a includes a sensor suite 140 and an onboard computer 150. AVs 110b through 110N also include the sensor suite 140 and onboard computer 150. A single AV in the fleet is referred to herein as AV 110, and the fleet of AVs is referred to collectively as AVs 110. The fleet management system 120 receives service requests for the AVs 110 and dispatches the AVs 110 to carry out the service requests. The fleet management system 120 also maintains a map database that includes lane-level data. When an AV 110 is dispatched for a service request, the fleet management system 120 and/or the AV 110 may determine a route for the AV 110 to follow based on the lane-level data in the map database. In particular, a navigation system may select a lane for routing the AV 110 among multiple candidate lanes based on a predicted performance of the lane.

The AV 110 is preferably a fully autonomous automobile, but may additionally or alternatively be any semi-autonomous or fully autonomous vehicle; e.g., a boat, an unmanned aerial vehicle, a self-driving car, etc. Additionally, or alternatively, the AV 110 may be a vehicle that switches between a semi-autonomous state and a fully autonomous state and thus, the AV may have attributes of both a semi-autonomous vehicle and a fully autonomous vehicle depending on the state of the vehicle.

The AV 110 may include a throttle interface that controls an engine throttle, motor speed (e.g., rotational speed of electric motor), or any other movement-enabling mechanism; a brake interface that controls brakes of the AV (or any other movement-retarding mechanism); and a steering interface that controls steering of the AV (e.g., by changing the angle of wheels of the AV). The AV 110 may additionally or alternatively include interfaces for control of any other vehicle functions, e.g., windshield wipers, headlights, turn indicators, air conditioning, etc.

The AV 110 includes a sensor suite 140, which includes a computer vision ("CV") system, localization sensors, and driving sensors. For example, the sensor suite 140 may include photodetectors, cameras, radar, sonar, lidar, GPS, wheel speed sensors, inertial measurement units (IMUs), accelerometers, microphones, strain gauges, pressure monitors, barometers, thermometers, altimeters, etc. The sensors may be located in various positions in and around the AV 110.

An onboard computer 150 is connected to the sensor suite 140 and functions to control the AV 110 and to process sensed data from the sensor suite 140 and/or other sensors in order to determine the state of the AV 110. Based upon the vehicle state and programmed instructions, the onboard computer 150 modifies or controls behavior of the AV 110. For example, the onboard computer 150 maneuvers the AV 110 according to lane routing selections determined by the navigation system based at least in part on lane-level data. The onboard computer 150 also collects data describing lane-level features and transmits the collected data to the fleet management system 120, which may incorporate the collected data into the map database.

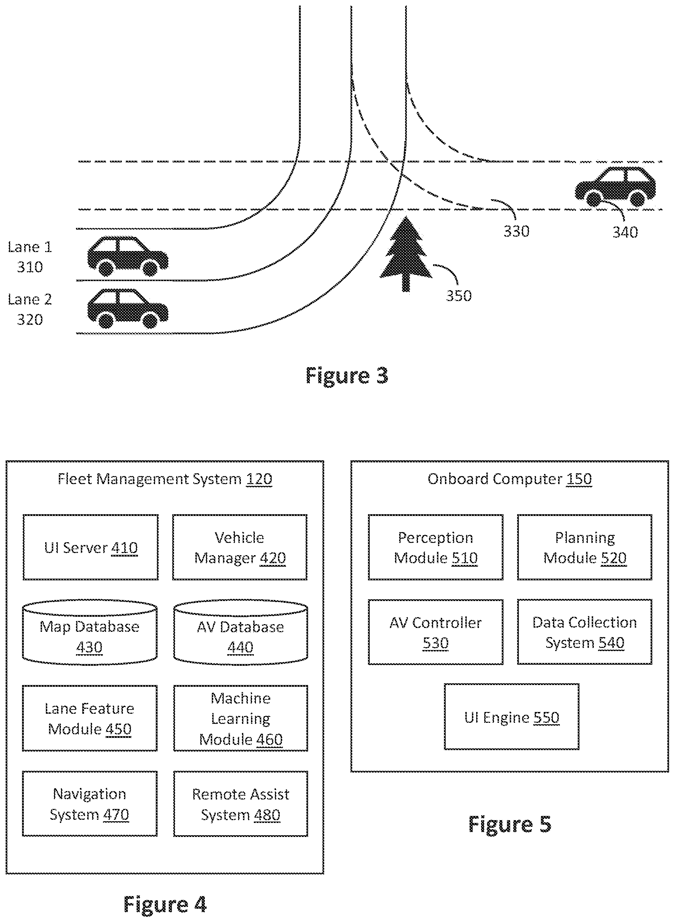

The onboard computer 150 is preferably a general-purpose computer adapted for I/O communication with vehicle control systems and sensor suite 140, but may additionally or alternatively be any suitable computing device. The onboard computer 150 is preferably connected to the Internet via a wireless connection (e.g., via a cellular data connection). Additionally or alternatively, the onboard computer 150 may be coupled to any number of wireless or wired communication systems. The onboard computer 150 is described further in relation to FIG. 5.

The fleet management system 120 manages the fleet of AVs 110. The fleet management system 120 may manage a service that provides or uses the AVs 110, e.g., a service for providing rides to users with the AVs 110, or a service that delivers items, such as prepared foods, groceries, or packages, using the AVs 110. The fleet management system 120 may select an AV from the fleet of AVs 110 to perform a particular service or other task, and instruct the selected AV (e.g., AV 110a) to autonomously drive to a particular location (e.g., a delivery address). The fleet management system 120 may select a route for the AV 110 to follow. The fleet management system 120 also manages fleet maintenance tasks, such as charging and servicing of the AVs 110.

As shown in FIG. 1, each of the AVs 110 communicates with the fleet management system 120. The AVs 110 and fleet management system 120 may connect over a public network, such as the Internet. The fleet management system 120 is described further in relation to FIG. 4.

### Example Lane Configurations and Lane-Level Routing

FIG. 2 illustrates a first set of candidate lanes according to some embodiments of the present disclosure. FIG. 2 shows three automobile lanes, lane 1 210, lane 2 220, and lane 3 230, on which automobiles drive in the same direction. In an example, a navigation system routes the AV 110 along the road having the three lanes 210-230, and the three lanes 210-230 are candidate lanes for the AV 110 to drive. Lane 1 210 has a first width w₁, and lane 2 220 and lane 3 230 have a second width w₂ that is wider than w₁. Lane 3 230 is adjacent to a bicycle lane 240, which has a width w_{b}. Lane 3 also has a large pothole 250. The fleet management system 120 stores parameters describing the three candidate lanes 210-230, e.g., the lane widths w₁, w₂, and w₃, lane surface data (e.g., data describing the pothole 250), and parameters of the adjacent bicycle lane 240 (e.g., width w₂, flow direction, flow rate, how often bicycles enter lane 3 230). The fleet management system 120 selects among the three candidate lanes 210-230 based on the parameters and performance data associated with the parameters, e.g., performance data indicating that lanes with large potholes and adjacent bicycle lanes, such as lane 3 230, generally have worse performance than wide middle lanes with no potholes, such as lane 2 220. The performance data may also indicate that wide middle lanes have better performance than narrow left lanes, such as lane 1 210. Thus, in this example, the fleet management system 120 may route the AV 110 on lane 2 220.

FIG. 3 illustrates a second set of candidate lanes according to some embodiments of the present disclosure. FIG. 3 shows two left turn lanes, lane 1 310 and lane 2 320, that both allow unprotected left turns. In an example, the navigation system routes the AV 110 to turn left on one of the two lanes 310 and 320, which are candidate lanes for the AV 110 to drive. The intersection also has an oncoming traffic lane 330 through which a vehicle 340 can proceed, the vehicle 340 having right-of-way over the left turn lanes 310 and 320 during their unprotected left turn. A tree 350 at the intersection obstructs the view across the intersection, including the view of automobiles in the left turn lanes 310 and 320. In particular, the tree 350 badly obstructs the view from a vehicle in lane 2 320, so that a sensor suite of a vehicle in lane 2 320 may not capture the oncoming vehicle 340. The fleet management system 120 stores data describing the candidate lanes 310 and 320, e.g., data describing that unprotected left turns are allowed by both lanes 310 and 320, and that the view of both lanes is obstructed, but the view of lane 2 320 is more obstructed during the unprotected left. Based on performance data associated with the parameters, e.g., performance data indicating that a more obstructed view is associated with lower performance metrics, the fleet management system 120 selects lane 1 310 for the AV 110 to perform the unprotected left turn.

### Example Fleet Management System

FIG. 4 is a block diagram illustrating the fleet management system 120 according to some embodiments of the present disclosure. The fleet management system 120 includes a UI (user interface) server 410, a vehicle manager 420, a map database 430, an AV database 440, a lane feature module 450, a machine learning module 460, a navigation system 470, and a remote assist system 480. In alternative configurations, different and/or additional components may be included in the fleet management system 120. Further, functionality attributed to one component of the fleet management system 120 may be accomplished by a different component included in the fleet management system 120 or a different system than those illustrated. For example, in some embodiments, some or all of the functionality of the navigation system 470 is performed by the AV 110, e.g., by the onboard computer 150. Furthermore, a portion of the data of the map database 430 and/or the AV database 440 (e.g., map data describing an area around a current location of the AV 110) may be stored on the AV 110 for access by a navigation system 470 local to the AV 110.

The UI server 410 is configured to communicate with client devices that provide a user interface to users. For example, the UI server 410 may be a web server that provides a browser-based application to client devices, or the UI server 410 may be a mobile app server that interfaces with a mobile app installed on client devices. The user interface enables the user to access a service of the fleet management system 120, e.g., to request a ride from an AV 110, or to request a delivery from an AV 110.

The vehicle manager 420 manages and communicates with a fleet of AVs, including AVs 110a through 110N. The UI server 410 transmits service requests received from users to the vehicle manager 420, and the vehicle manager 420 assigns AVs 110 to the service requests. More broadly, the vehicle manager 420 directs the movements of the AVs 110 in the fleet. For example, the vehicle manager 420 may instruct AVs 110 to drive to other locations while not servicing a user, e.g., to improve geographic distribution of the fleet, to anticipate demand at particular locations, to drive to a charging station for charging, etc. The vehicle manager 420 also instructs AVs 110 to return to AV facilities for recharging, maintenance, or storage. The vehicle manager 420 may interface with the navigation system 470, which selects a route for an AV 110 to follow.

In an embodiment, the UI server 410 receives a service request from a user, such as a request for a ride. The vehicle manager 420 selects an AV 110 of the fleet to carry out the service request. The vehicle manager 420 transmits the origin location (e.g., starting point of the AV 110), destination location (e.g., drop-off location), and any waypoints (e.g., location to pick up the user) to the navigation system 470. The navigation system 470 determines a route for the AV 110 using lane-level data, as described below, and provides the route to the vehicle manager 420. The vehicle manager 420 transmits the selected route to the AV 110. The vehicle manager 420 may receive updates about the location of the AV 110 and provide the updates to the navigation system 470. The navigation system 470 may periodically recalculate a route for the AV 110, e.g., based on changing traffic conditions, which the vehicle manager 420 transmits to the AV 110.

The map database 430 stores data describing a set of connected roadways. Each of the roadways has one or more lanes. The map database 430 may store some data at the roadway level, such as data describing geographic location of the road, connections to other roadways, speed data (e.g., speed limit), and traffic flow direction. The map database 430 also stores lane-level parameters that describes individual lanes. For example, lane-level parameters include data describing the position of a given lane relative to other lanes and roadways, e.g., whether the lane is a single-lane road, or the position of the lane relative to other lanes of a multi-lane road. Lane-level parameters include types of permitted maneuver for the lane, e.g., whether a lane crossing an intersection is a right-turn lane, left-turn lane, straight lane, or has multiple permitted maneuver, or whether or not a vehicle is permitted to change to a neighboring lane. The lane-level parameters may include attributes describing the environment of a given lane, such as attributes describing any visual obstructions associated with the lane (e.g., trees, statues, buildings, or fences that obstruct the view of oncoming traffic) or physical obstructions (e.g., downed trees, construction, large potholes). Obstruction-related parameters may include the size of the obstruction, the location of or distance to the obstruction, and what is blocked by the obstruction (e.g., oncoming traffic, a traffic light, a stop sign). Additional lane-level parameters may include measurements of geometric features of the lane, such as width of a lane at various points or along a spans (e.g., average and/or minimum width for the lane along each city block), curvature (e.g., maximum or average curvature around a turn), or grade (e.g., maximum and/or average grade of the lane along a city block). Further lane-level parameters may include measurements of lane use, such as statistics describing traffic levels or traffic speeds at different times of day, and data describing the frequency of vehicles moving into or out of the lane (e.g., from neighboring lanes, from intersecting streets, or from driveways). The lane-level parameters may also include parameters describing the performance of AVs along a lane, such as takeover rates, collision rates, or comfort levels.

The AV database 440 stores historical driving data collected from the fleet of AVs 110. The fleet of AVs 110 may collect data while driving, including images, point clouds, speed records, traffic data, takeover data, collision data, IMU data, and other types of data, which the AVs 110 transmit to the fleet management system 120 for storage in the AV database 440. At least a portion of the data stored in the AV database 440 is referenced to a particular lane in which the AV 110 that collected the data travelled. The historical driving data includes performance-related events. For example, the AV database 440 stores data describing takeover events on a given lane; a takeover event occurs when a safety driver riding in the AV 110 asserts manual control over the AV 110. As another example, the AV database 440 stores, for a given lane, collision data describing any collisions of AVs 110 traveling on the lane, including whether a collision occurred, other vehicles or objects involved in the collision, and collision severity. As a further example, the AV database 440 stores data describing comfort levels of vehicle passengers on trips down a given lane. The comfort level of a lane may be obtained by polling riders traveling down the lane, or inferred from ride data gathered by the AVs 110, e.g., data describing sudden accelerations or decelerations (e.g., as measured by IMU in the sensor suite 140, or based on acceleration and braking data), data describing sudden turns or swerves (e.g., as measured by the IMU, or based on steering data), or data describing the lane surface (e.g., as measured by the IMU, or based on roadway data, such as known locations of potholes or speed bumps).

The lane feature module 450 processes data stored in the AV database 440 to generate at least some of the lane-level parameters stored in the map database 430. For example, the lane feature module 450 calculates lane-level parameters describing performance of AVs 110 based on the data collected from the AV fleet 110 and stored in the AV database 440. For example, a number of takeovers may be divided by a total number of trips of AVs 110 down the lane to calculate a takeover rate for a lane. As another example, the comfort level data is processed to determine one or more lane-level comfort parameters, such as ride smoothness. The lane feature module 450 may obtain data from additional sources, including third party data sources, to calculate some lane-level performance parameters. For example, the lane feature module 450 may obtain collision data from one or more insurance companies and process this data, optionally in combination with collision data collected by AVs 110, to determine a collision rate for the lane.

The lane feature module 450 may determine or update other lane-level parameters based on data in the AV database 440 and/or other data sources. For example, the lane feature module 450 retrieves current construction information and loads the construction information into the map database 430. As another example, the lane feature module 450 derives certain lane-level parameters from other data sets. For example, lane-level geometric data may be calculated from a map data set that describes boundaries of individual lanes, the boundaries having been drawn automatically (e.g., using a model for processing satellite imagery) or manually.

The machine learning module 460 develops a model to predict performance of a lane. The machine learning module 460 may apply supervised or unsupervised learning processes to the stored lane-level parameters in the map database 430 along with historical driving data stored in the AV database 440 to generate a predictive model. The machine learning algorithm may determine sets of one or more lane parameters that describe lane groups. In one embodiment, the machine learning module 460 generates a decision tree that groups lanes by one or more lane-level parameters based on the historical driving data. In another embodiment, the machine learning module 460 performs a clustering algorithm to generate lane groupings based on the stored lane-level parameters along with historical driving data. In other embodiments, rather than generating lane groups, the machine learning module 460 generates an artificial neural network or another type of model to predict performance based on lane-level parameters.

When generating lane groups (e.g., decision tree or clustering algorithms), the lanes that make up a lane group are associated with similar levels of performance, as measured by the historical driving data, relative to lanes of at least one other lane group described by a different set of parameters. For example, the machine learning algorithm may determine, as one group, inner left turn lanes with a turn angle above 120°, and as another group, outer left turn lanes with a turn angle above 120°. The machine learning algorithm may determine to separate the two types of dual-left turn lanes with a turn angle above 120° based on the historical data showing that, across many observations, inner left turn lanes with a turn angle above 120° have a different performance rate from outer left turn lanes with a turn angle above 120°. The machine learning module 460 may calculate performance metrics across lanes included in each group. For example, the machine learning module 460 combines all observations across the lanes in a particular group to determine a takeover rate for that group (e.g., a takeover rate for inner left turn lanes with a turn angle above 120°).

The machine learning module 460 may consider any of the parameters described with respect to the map database 430 in determining the groups. Different groups may be described by different numbers of parameters. In addition, the machine learning module 460 may consider the parameters of adjacent lanes in determining the groups. For example, in processing lane parameters to determine groups, the machine learning module 460 retrieves from the map database 430 data describing each lane's adjacent lanes, optionally including any bicycle lanes, bus lanes, sidewalks, etc., and parameters describing the adjacent lanes. The machine learning module 460 may determine groups based on the parameters of adjacent lanes, such as lane type (e.g., car, bus, pedestrian, or bicycle), lane width, flow direction, and flow rate. For example, one groups may be single lane roads adjacent to a bidirectional bicycle lane with an average flow rate of 3 bicycles/minute.

The navigation system 470 determines a route for the AV 110 based at least in part on lane-level data in the map database 430. In some embodiments, the navigation system 470 uses existing routing algorithms to determine one or more candidate routes along a set of roadways for the AV 110 to travel that optimizes one or more objectives, e.g., time or distance, and selects between different lanes on a route or different candidate routes based on lane-level information. In some embodiments, the navigation system 470 incorporates predicted lane performance when generating candidate routes and calculating routing costs for candidate routes. For example, the lane performance may be included as one factor in an overall route cost that includes other performance factors, such as time, distance, fuel usage, roadway performance, vehicle wear, and/or other factors, and the navigation system 470 selects a route that minimizes the overall route cost. The navigation system 470 may factor in a cost of changing lanes when selecting a route. For example, the navigation system 470 factors in an expected time to change lane (e.g., if the AV 110 slows down when changing lanes), or a difficulty in making a given lane change (e.g., the navigation system 470 avoids crossing multiple lanes in a short distance, or includes a cost for a difficult lane change). Several simplified examples of selecting candidate lanes are described below. It should be understood that the navigation system 470 may incorporate lane-level information at various points in the routing process, e.g., when identifying candidate routes, when selecting a candidate route, in real-time as the AV 110 is driving, and that the lane performance metrics may be one of many factors considered when routing the AV 110, and that the lane-level data may be considered in tandem with other factors, not all of which are outlined here.

In one example, the navigation system 470 identifies candidate lanes along the determined route, e.g., one roadway along the route has two adjacent lanes on which the AV 110 can travel (e.g., two lanes that travel straight, or two left-turn lanes), which are candidate lanes for the AV 110. The navigation system 470 retrieves one or more parameters describing each of the candidate lanes from the map database 430. The navigation system 470 determines a performance metric for each of the candidate lanes based on the retrieved parameter(s) for the candidate lane. For example, the navigation system 470 retrieves a takeover rate metric from the map database 430, the takeover rate calculated by the lane feature module 450 based on data describing a number of recorded AV takeovers and number of trips down the lane by the AV fleet 110. As another example, the navigation system 470 determines a predicted takeover likelihood based on parameters describing the geometry of the lane and visual obstructions of the lane. The navigation system 470 may determine the predicted takeover likelihood based on takeover rates across a group of similar lanes, such as lanes with a similar geometry and similar visual obstructions, as determined by the machine learning module 460. Based on the performance metric, the navigation system 470 selects a candidate lane (e.g., one of the two left-turn lanes) for routing the AV 110.

In another example, the navigation system 470 identifies multiple candidate routes between an origin point and a destination point and selects a route for the AV 110 based on lane-level data associated with each of the candidate routes. For example, the navigation system 470 identifies a first route that includes an unprotected left turn lane on a given street, and a second route that includes a different unprotected left turn lane on a different street, e.g., a parallel street. The navigation system 470 compares performance metrics for the lanes included in the candidate routes and selects a route based on the lane-level performance metrics. For example, if the left turn lane on the first route has a higher performance metric than the left turn lane on the second route, the navigation system 470 selects the first route. The navigation system 470 may compare two routes by determining one or more composite scores for the routes and comparing the composite score(s). For example, the navigation system 470 calculates an average performance metric of the lanes along each route, finds a minimum lane performance metric along each route, or calculates other statistics summarizing performance across each route. The navigation system 470 may calculate composite performance metrics for portions of the route (e.g., a portion from the origin point to a first waypoint, or a portion from the origin point to a point common to multiple candidate routes), and select a route for that portion based on the composite performance metrics.

As discussed above, one example performance metric for a candidate lane is takeover likelihood, which is the likelihood that a safety driver in the AV asserts manual control over the AV while the AV travels along the candidate lane. In one embodiment, the takeover likelihood performance metric is an observed takeover rate on a lane that as a large number of observations (e.g., more than 1000) in the AV database 440. For example, the fleet of AVs 110 has collected 10,000 observations of a lane, by driving down the lane 10,000 times. If a safety driver manually took control 50 times, the observed takeover rate is 0.5%, In another embodiment, the takeover rate performance metric is based on observations across a group of lanes that have been grouped together by the machine learning module 460, as described above. For example, the navigation system 470 retrieves parameters of a given candidate lane indicating that the lane is 12 feet (3.7 m) wide, has no curvature, and has an adjacent high-traffic bicycle lane. The navigation system 470 retrieves data describing takeover rate on a group of similar lanes identified by the machine learning module 460; for example, a fleet of AVs 110 traveling on the group of lanes has collected 25,000 observations across lanes in the group, of which safety drivers manually took control 25 times, for an observed takeover rate of 0.1%. Thus, based on this group data, the navigation system 470 predicts a takeover rate of 0.1% for the candidate lane.

Other performance metrics may be used in addition to or instead of takeover rate. Another example performance metric is a likelihood that the AV experiences a collision while traveling along the candidate lane. Other example performance metrics describe a comfort level of a passenger in the AV or others, such as pedestrians, bicyclists, and other drivers or passengers in other vehicles. As discussed above, the comfort level may be based on rider polling and/or based on one or more factors that contribute to rider comfort, such as sudden accelerations or decelerations, data describing sudden turns or swerves, or data describing the lane surface. In some embodiments, the navigation system 470 determines a composite performance metric based on multiple types of performance metrics, e.g., by multiplying the takeover rate and the collision rate.

In some embodiments, the performance metric may be determined for a given lane under a given condition or set of conditions. For example, a candidate lane may have one performance metric during daytime, and a different performance metric during nighttime, e.g., if performance drops due to lower visibility at night, or if performance increases due to less traffic at night. The condition information may be used to select observations in the AV database 440, e.g., if 40 of the 50 takeovers observed for the lane described above occurred at night, and 2000 of the observations were made at night, the navigation system 470 may determine a takeover rate of 2% based on the nighttime observations. Other condition information may include, for example, traffic conditions (e.g., expected rush hour traffic, or real-time traffic data), other visibility conditions (e.g., rain, fog, smoke, snow), and season (e.g., if foliage decreases visibility at an intersection).

In some embodiments, the navigation system 470 identifies a set of lanes that have a performance metric below a threshold and avoids these lanes if possible when determining a route. For example, the navigation system 470 permits a lane with a performance metric below the threshold to be included in the route if the lane cannot be avoided, e.g., the lane is at the origin or destination, or the route cannot be calculated without using the lane. The navigation system 470 may balance the performance metrics with other factors, such as speed, distance, costs (e.g., energy costs, avoiding tolls), or scenery. A user may provide input to the UI server 410 indicating routing preferences, e.g., preferring a more comfortable and scenic ride over a faster ride, or vice versa.

The remote assist system 480 is a system for that allows a human to perform manual remote observation of the AV 110 and provide inputs to the AV 110. The fleet management system 120 provides the remote assist system 480 to enable an operator to observe the AV 110 when the AV encounters an unusual environment or situation and to assist the AV 110 as needed. The remote assist system 480 provides user interfaces displaying, for example, images collected by the sensor suite 140, other data collected by the sensor suite 140, and a map showing the location of the AV 110. The remote assist system 480 allows the operator to provide manual inputs to the AV 110, such as the identify of an object the AV 110 cannot identify or a current status of a traffic light or other dynamic signal.

In some embodiments, if the navigation system 470 determines that a lane on which the AV 110 is routed has a performance metric below a threshold, the remote assist system 480 is activated and displays an alert to an operator relating to the performance metric of the selected candidate lane. The alert may provide information about any roadway features that drive the low performance rating, such as whether the AV 110 has low visibility on a lane, or if there is an adjacent high-traffic bicycle lane. The remote assist system 480 may be activated by the navigation system 470 that determined the route in response to determining that the AV 110 is approaching the lane with the low performance score. Alternatively, the remote assist system 480 may be activated by the AV 110 in response to the AV 110 detecting that it is approaching a low performance lane. In some embodiments, the remote assist system 480 may be activated based on certain parameters but not on others, e.g., the remote assist system 480 is activated based on visibility parameters, but not for road surface parameters.

### Example Onboard Computer

FIG. 5 is a block diagram illustrating the onboard computer 150 according to some embodiments of the present disclosure. The onboard computer 150 includes a perception module 510, a planning module 520, an AV controller 530, a data collection system 540, and a UI engine 550. In alternative configurations, fewer, different and/or additional components may be included in the onboard computer 150. Further, functionality attributed to one component of the onboard computer 150 may be accomplished by a different component included in the onboard computer 150 or a different system than those illustrated.

The perception module 510 identifies objects in the environment of the AV 110. The sensor suite 140 produces a data set that is processed by the perception module 510 to detect other cars, pedestrians, trees, bicycles, and objects traveling on or near the road on which the AV 110 is traveling, and indications surrounding the AV 110 (such as construction signs, traffic cones, traffic lights, stop indicators, and other street signs). For example, the data set from the sensor suite 140 may include images obtained by cameras, point clouds obtained by lidar (light detecting and ranging) sensors, and data collected by radar sensors. The perception module 510 may include one or more classifiers trained using machine learning to identify particular objects. For example, a multi-class classifier may be used to determine whether each object in the environment of the AV 110 is one of a set of potential objects, e.g., a vehicle, a pedestrian, or a bicyclist. As another example, a pedestrian classifier recognizes pedestrians in the environment of the AV 110, a vehicle classifier recognizes vehicles in the environment of the AV 110, etc. The perception module 510 may also perform predictive analysis on some recognized objects, e.g., to determine projected pathways of other vehicles, bicycles, and pedestrians.

In some embodiments, settings of the perception module 510 can be adjusted to better sense particular types of objects, e.g., by adjusting how much processing power of the perception module 510 is devoted to a particular different types of objects and calculating predictions for such objects. For example, in a high-pedestrian area, the perception module 510 can be tuned to devote more computing resources to identifying and tracking pedestrians. As another example, the settings of the sensor suite 140 can be adjusted to better sense in a particular direction, e.g., a camera may receive images at a higher rate in the direction of a high traffic bicycle lane, or a radar sensor (e.g., an articulating radar array) may be focused towards an upcoming intersection. The perception module 510 may devote more processing resources to processing data from a particular direction, e.g., the direction of the bicycle lane or intersection.

The settings of the perception module 510 may be selected based on lane parameters and/or performance metrics. The navigation system 470 may determine that the lane selected for the AV 110 to travel has a performance metric below a threshold performance metric, and identifies a parameter or set of parameters of the lane that contributes to the performance metric being below the threshold performance metric. For example, the navigation system 470 determines that a selected lane for the AV 110 has a low performance metric due to a hidden high-traffic driveway that enters the lane. In response, the navigation system 470 adjusts a setting of the perception module 510 based on the identified parameter so that the perception module 510 is better attuned to a particular hazard or condition associated with the lane. For example, the perception module 510 adjusts a setting to apply more processing resources for looking for vehicles entering the roadway. As another example, the perception module 510 adjusts a setting to collect more detailed and/or frequent data in the direction of the driveway, and to devote more processing resources to the extra obtained data.

The planning module 520 plans a path for the AV 110 based on data received from the perception module 510 and from navigation information received from the navigation system 470. The planning module 520 determines a planned pathway for the AV 110 to follow based on the route and lane selected by the navigation system 470. When objects are present in the environment of the AV 110, the planning module 520 determines the planned pathway for the AV 110 based on predicted pathways of the objects and right-of-way rules that regulate behavior of vehicles, bicycles, pedestrians, or other objects. The planned pathway includes locations for the AV 110 to maneuver to, and timing and/or speed of the AV 110 in maneuvering to the locations.

In some embodiments, the planning module 520 plans that path based on lane parameters and/or performance metrics. The planning module 520 may, for example, select a lower speed for driving on a road with a low performance metric to prevent a low-performance ride, e.g., to avoid collisions, sudden braking or swerving, or takeovers. The planning module 520 may make specific path adjustments based on one or more parameters of the selected lane. For example, while driving on the lane with the hidden high-traffic driveway described above, the planning module 520 may plan a path with a lower velocity than the planning module 520 typically selects for the roadway type to reduce the likelihood of sudden braking events or collisions near the driveway. As another example, the navigation system 470 provides parameters describing a high-traffic bicycle lane to the right of the selected lane, the bicycle lane resulting in lower performance on the selected lane. The planning module 520 plans a path in response to this bicycle lane, e.g., a path that is further to the left in the selected lane than the AV 110 normally drives, to avoid bicycles that may edge into the selected lane from the bicycle lane.

The AV controller 530 instructs the movement-related subsystems of the AV 110 to maneuver according to the planned pathway provided by the planning module 520. The AV controller 530 may include the throttle interface for controlling the engine throttle, motor speed (e.g., rotational speed of electric motor), or any other movement-enabling mechanism; the brake interface for controlling the brakes of the AV 110 (or any other movement-retarding mechanism); and the steering interface for controlling steering of the AV 110 (e.g., by changing the angle of wheels of the AV).

The data collection system 540 collects data describing trips by the AV 110 and reports the data to the fleet management system 120, which stores the data in the AV database 440. The data collection system 540 collects data indicating which lane of a road on which it is driving, and creates data records that are linked to the lane. The data records may include, for example, images, point clouds, speed records, traffic data, takeover data, collision data, and IMU data.

The UI engine 550 generates a graphical user interface (GUI) that displays information about the AV 110, such as the planned pathway, to a user on a screen of a user device. The user device may be mounted in the AV 110, e.g., as a display screen or touchscreen mounted in the dashboard, or a tablet mounted in the AV 110. As another example, the user device is a device, such as a smartphone or tablet, used by a safety driver during testing of the AV 110. The UI engine 550 receives data from other components of the onboard computer 150, e.g., data from the planning module 520 describing the planned pathway of the AV 110. The Ul engine 550 may also receive data describing performance metrics from the navigation system 470. The UI engine 550 may provide alerts to an operator (e.g., a safety driver) when the performance metric is below a threshold performance metric, indicating that the operator should pay particular attention. The UI engine 550 may include information describing the one or more parameters that contribute to the low performance metric, e.g., a warning about a hidden driveway, or an upcoming visual obstruction, so the operator can pay particular attention to these hazards or conditions.

### Example Method for Selecting a Route for an AV

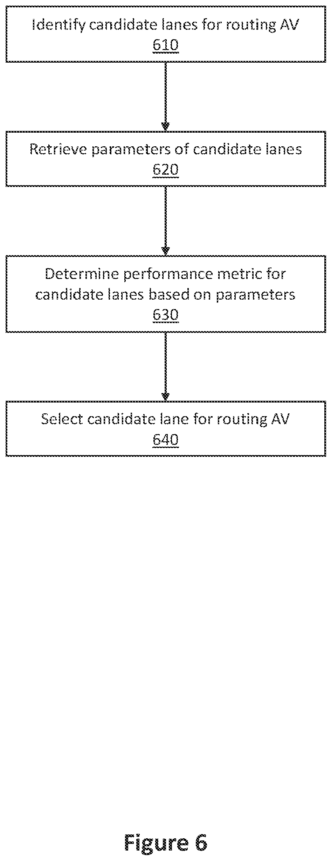

FIG. 6 illustrates a flow diagram showing a process for selecting a route for an AV according to some embodiments of the present disclosure. The navigation system 470 identifies 610 a set of candidate lanes for routing the AV 110. For example, the navigation system 470 determines one or several possible routes for the AV 110 between and origin point and a destination point, and identifies, for a portion of the route or routes, a set of candidate lanes. The navigation system 470 identifies the lanes within a map database, e.g., map database 430, that stores data describing a set of connected roadways each having one or more lanes.

The navigation system 470 retrieves 620 parameters of the identified candidate lanes from the map database 430. The navigation system 470 determines 630 a performance metric for each of the candidate lanes based on at least a portion of the retrieved parameters. For example, for a given candidate lane, the navigation system 470 identifies a lane group to which the candidate lane belongs based on the retrieved parameters, and retrieves a performance metric for the lane group.

The navigation system 470 selects 640 a candidate lane for routing the AV 110 based on the performance metrics of the candidate lanes. For example, the navigation system 470 selects the candidate lane with the best performance metric (e.g., lowest takeover rate or lowest collision rate). The navigation system 470 may select a route for the AV 110 based on lane performance metrics across the candidate routes.

### Other Implementation Notes, Variations, and Applications

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

In one example embodiment, any number of electrical circuits of the figures may be implemented on a board of an associated electronic device. The board can be a general circuit board that can hold various components of the internal electronic system of the electronic device and, further, provide connectors for other peripherals. More specifically, the board can provide the electrical connections by which the other components of the system can communicate electrically. Any suitable processors (inclusive of digital signal processors, microprocessors, supporting chipsets, etc.), computer-readable non-transitory memory elements, etc. can be suitably coupled to the board based on particular configuration needs, processing demands, computer designs, etc. Other components such as external storage, additional sensors, controllers for audio/video display, and peripheral devices may be attached to the board as plug-in cards, via cables, or integrated into the board itself. In various embodiments, the functionalities described herein may be implemented in emulation form as software or firmware running within one or more configurable (e.g., programmable) elements arranged in a structure that supports these functions. The software or firmware providing the emulation may be provided on non-transitory computer-readable storage medium comprising instructions to allow a processor to carry out those functionalities,

It is also imperative to note that all of the specifications, dimensions, and relationships outlined herein (e.g., the number of processors, logic operations, etc.) have only been offered for purposes of example and teaching only. Such information may be varied considerably without departing from the scope of the appended claims. The specifications apply only to one non-limiting example and, accordingly, they should be construed as such. In the foregoing description, example embodiments have been described with reference to particular arrangements of components. Various modifications and changes may be made to such embodiments without departing from the scope of the appended claims. The description and drawings are, accordingly, to be regarded in an illustrative rather than in a restrictive sense.

Note that with the numerous examples provided herein, interaction may be described in terms of two, three, four, or more components. However, this has been done for purposes of clarity and example only. It should be appreciated that the system can be consolidated in any suitable manner. Along similar design alternatives, any of the illustrated components, modules, and elements of the FIGS. may be combined in various possible configurations, all of which are clearly within the broad scope of this Specification.

Note that in this Specification, references to various features (e.g., elements, structures, modules, components, steps, operations, characteristics, etc.) included in "one embodiment", "example embodiment", "an embodiment", "another embodiment", "some embodiments", "various embodiments", "other embodiments", "alternative embodiment", and the like are intended to mean that any such features are included in one or more embodiments of the present disclosure, but may or may not necessarily be combined in the same embodiments,

Numerous other changes, substitutions, variations, alterations, and modifications may be ascertained to one skilled in the art and it is intended that the present disclosure encompass all such changes, substitutions, variations, alterations, and modifications as falling within the scope of the appended claims. Note that all optional features of the systems and methods described above may also be implemented with respect to the methods or systems described herein and specifics in the examples may be used anywhere in one or more embodiments.

## Claims

1. A method for selecting a route for an autonomous vehicle, AV (110a) comprising:
Identifying (610), within a map database storing data describing a set of connected roadways each having one or more lanes, a plurality of candidate lanes for routing the AV;
Retrieving (620), from the map database, at least one parameter of each of the plurality of candidate lanes;
determining (630)a performance metric for each of the plurality of candidate lanes, the performance metric for a given candidate lane based on the retrieved at least one parameter of the given candidate lane; and
selecting (640) a candidate lane of the plurality of candidate lanes for routing the AV based at least in part on the performance metrics for the plurality of candidate lanes,
wherein the performance metric for a lane reflects an expected driving performance of
the vehicle when autonomously navigating the lane, and
**characterised in that** the determining the performance metric for a given candidate lane comprises:
identifying, based on the at least one parameter for the given candidate lane, a lane group comprising the given candidate lane and at least one non-candidate lane, the at least one non-candidate lane having a parameter matching at least one of the parameters of the given candidate lane; and
determining the performance metric of the lane group, the performance metric based on data describing previous trips by AVs along the non-candidate lanes in the lane group.

2. The method of claim 1, wherein the plurality of candidate lanes comprise at least two adjacent lanes on a roadway, and wherein selecting a candidate lane comprises selecting one of the at least two adjacent lanes on the roadway for the AV to travel on.

3. The method of claim 1, wherein the plurality of candidate lanes comprise a first lane on a first roadway and a second lane on a second roadway, and selecting a candidate lane comprises:
selecting the first lane on the first roadway; and
determining a route for the AV from an origin to a destination, the route comprising the first lane on the first roadway.

4. The method of claim 1, wherein the at least one parameter comprises an attribute of an environment of the given candidate lane, the attribute describing a visual obstruction or physical obstruction associated with the candidate lane.

5. The method of claim 1, wherein the at least one parameter comprises a permitted vehicle maneuver on the given candidate lane and a measurement of a geometric feature of the given candidate lane.

6. The method of claim 1, wherein the at least one parameter comprises a measurement of use of the given candidate lane, the measurement determined based on data received from a plurality of AVs traveling on the given candidate lane.

7. The method of claim 1, wherein the lane group is determined by a machine learning algorithm, the machine learning algorithm configured to determine, based on historical driving data describing previous trips by the AVs, that lanes having the at least one parameter have a similar performance relative to at least one other group of lanes sharing at least one other parameter.

8. The method of claim 1, further comprising:
for a candidate lane of the plurality of candidate lanes, retrieving, from the map database, data describing at least one lane adjacent to the candidate lane, the retrieved data comprising at least one of a lane type, a lane width, a flow direction, and flow rate; and
determining the performance metric for the candidate lane further based on the data describing the at least one lane adjacent to the candidate lane.

9. The method of claim 1, wherein the performance metric is a likelihood that a safety driver in the AV asserts manual control over the AV while the AV is travelling along the candidate lane.

10. The method of claim 1, wherein the performance metric is one of a likelihood that the AV experiences a collision while traveling along the candidate lane, and a metric describing a comfort level of a passenger in the AV.

11. The method of claim 1, further comprising:
planning a path the AV based on the at least one parameter of the selected candidate lane, the path comprising one of a speed of the AV and a position of the AV within the selected candidate lane; and
maneuvering the AV along the selected candidate lane according to the planned path.

12. The method of claim 1, further comprising:
determining that the selected candidate lane has a performance metric below a threshold performance metric;
identifying a parameter of the selected candidate lane contributing to the performance metric being below the threshold performance metric; and
adjusting a setting of a perception module of the AV based on the identified parameter.

13. The method of claim 1, further comprising:
determining that the selected candidate lane has a performance metric below a threshold performance metric; and
in response to the determination, displaying an alert to an operator relating to the performance metric of the selected candidate lane.

14. A non-transitory computer-readable medium storing instructions for selecting a route for an autonomous vehicle, AV, the instructions, when executed by a processor, cause the processor to carry out the method according to any of preceding claims 1 to 13.

## Patentansprüche

1. Verfahren zum Auswählen einer Route für ein autonomes Fahrzeug, AV, (110a), umfassend:
Identifizieren (610), innerhalb einer Kartendatenbank, die Daten speichert, die eine Menge von verbundenen Straßen beschreiben, die jeweils eine oder mehrere Spuren aufweisen, mehrerer Kandidatenspuren zur Streckenführung des AV;
Abfragen (620), von der Kartendatenbank, mindestens eines Parameters von jeder der mehreren Kandidatenspuren;
Bestimmen (630) einer Leistungsmetrik für jede der mehreren Kandidatenspuren, wobei die Leistungsmetrik für eine gegebene Kandidatenspur auf dem abgefragten mindestens einen Parameter der gegebenen Kandidatenspur basiert; und
Auswählen (640) einer Kandidatenspur der mehreren Kandidatenspuren zur Streckenführung des AV basierend auf zumindest teilweise der Leistungsmetrik für die mehreren Kandidatenspuren,
wobei die Leistungsmetrik für eine Spur eine erwartete Fahrleistung des Fahrzeugs beim autonomen Navigieren auf der Spur widerspiegelt, und
**dadurch gekennzeichnet, dass** das Bestimmen der Leistungsmetrik für eine gegebene Kandidatenspur umfasst:
Identifizieren, basierend auf dem mindestens einen Parameter für die gegebene Kandidatenspur, einer Spurgruppe, welche die gegebene Kandidatenspur und mindestens eine Nicht-Kandidatenspur umfasst, wobei die mindestens eine Nicht-Kandidatenspur einen Parameter aufweist, der zu mindestens einem der Parameter der gegebenen Kandidatenspur passt; und
Bestimmen der Leistungsmetrik für die Spurgruppe, wobei die Leistungsmetrik auf Daten basiert, die vorherige Fahrten von AVs entlang der Nicht-Kandidatenspuren in der Spurgruppe beschreiben.

2. Verfahren nach Anspruch 1, wobei die mehreren Kandidatenspuren mindestens zwei benachbarte Spuren auf einer Straße umfassen und wobei das Auswählen einer Kandidatenspur das Auswählen einer von den mindestens zwei benachbarten Spuren auf der Straße zum Fahren des AV darauf umfasst.

3. Verfahren nach Anspruch 1, wobei die mehreren Kandidatenspuren eine erste Spur auf einer ersten Straße und eine zweite Spur auf einer zweiten Straße umfassen und das Auswählen einer Kandidatenspur umfasst:
Auswählen der ersten Spur auf der ersten Straße; und
Bestimmen einer Route für das AV von einem Ausgangspunkt zu einem Zielpunkt, wobei die Route die erste Spur auf der ersten Straße umfasst.

4. Verfahren nach Anspruch 1, wobei der mindestens eine Parameter ein Attribut einer Umgebung der gegebenen Kandidatenspur umfasst, wobei das Attribut eine visuelle Behinderung oder physikalische Behinderung beschreibt, die mit der Kandidatenspur verbunden ist.

5. Verfahren nach Anspruch 1, wobei der mindestens eine Parameter ein zulässiges Fahrzeugmanöver auf der gegebenen Kandidatenspur und eine Messung eines geometrischen Merkmals der gegebenen Kandidatenspur umfasst.

6. Verfahren nach Anspruch 1, wobei der mindestens eine Parameter eine Messung der Nutzung einer gegebenen Kandidatenspur umfasst, wobei die Messung basierend auf Daten bestimmt wird, die von mehreren AVs empfangen werden, die auf der gegebenen Kandidatenspur fahren.

7. Verfahren nach Anspruch 1, wobei die Spurgruppe durch einen Maschinenlernalgorithmus bestimmt wird, wobei der Maschinenlernalgorithmus dazu ausgestaltet ist, basierend auf historischen Fahrdaten, die vorherige Fahrten von den AVs beschreiben, diejenigen Spuren zu bestimmen, für die der mindestens eine Parameter eine ähnliche Leistung in Bezug auf mindestens eine andere Gruppe von Spuren aufweist, die mindestens einen anderen Parameter teilen.

8. Verfahren nach Anspruch 1, ferner umfassend:
für eine Kandidatenspur von den mehreren Kandidatenspuren, Abfragen, von der Kartendatenbank, von Daten, die mindestens eine Spur beschreiben, die der Kandidatenspur benachbart ist, wobei die abgefragten Daten mindestens eines von einem Spurtyp, einer Spurbreite, einer Flussrichtung und einer Flussgeschwindigkeit umfassen; und
Bestimmen der Leistungsmetrik für die Kandidatenspur ferner basierend auf den Daten, welche die mindestens eine Spur beschreiben, die der Kandidatenspur benachbart ist bzw. sind.

9. Verfahren nach Anspruch 1, wobei die Leistungsmetrik eine Wahrscheinlichkeit ist, dass ein Sicherheitsfahrer in dem AV manuelle Steuerung gegenüber dem AV durchsetzt, während das AV die Kandidatenspur entlangfährt.

10. Verfahren nach Anspruch 1, wobei die Leistungsmetrik eine von einer Wahrscheinlichkeit, dass das AV beim Fahren entlang der Kandidatenspur eine Kollision erleidet, und einer Metrik ist, die ein Komfortniveau eines Insassen in dem AV beschreibt.

11. Verfahren nach Anspruch 1, ferner umfassend:
Planen eines Pfads für das AV basierend auf dem mindestens einen Parameter der ausgewählten Kandidatenspur, wobei der Pfad eines von einer Geschwindigkeit des AV und einer Position des AV innerhalb der ausgewählten Kandidatenspur umfasst; und
Manövrieren des AV entlang der ausgewählten Kandidatenspur gemäß dem geplanten Pfad.

12. Verfahren nach Anspruch 1, ferner umfassend:
Bestimmen, dass die ausgewählte Kandidatenspur eine Leistungsmetrik unter einer Schwellenleistungsmetrik aufweist;
Identifizieren eines Parameters der ausgewählten Kandidatenspur, der zu der Leistungsmetrik beiträgt, die unter der Schwellenleistungsmetrik liegt; und
Anpassen einer Einstellung eines Wahrnehmungsmoduls des AV basierend auf dem identifizierten Parameter.

13. Verfahren nach Anspruch 1, ferner umfassend:
Bestimmen, dass die ausgewählte Kandidatenspur eine Leistungsmetrik unter einer Schwellenleistungsmetrik aufweist; und
als Reaktion auf die Bestimmung, Anzeigen eines Alarms, der die Leistungsmetrik der ausgewählten Kandidatenspur betrifft, für einen Bediener.

14. Nichtflüchtiger maschinenlesbarer Datenträger, der Anweisungen zum Auswählen einer Route für ein autonomes Fahrzeug, AV, speichert, wobei die Anweisungen, wenn sie durch einen Prozessor ausgeführt werden, bewirken, dass der Prozessor das Verfahren nach einem der vorhergehenden Ansprüche 1 bis 13 durchführt.

## Revendications

1. Procédé de sélection d'un itinéraire pour un véhicule autonome, VA (110a), comprenant :
l'identification (610), dans une base de données cartographique dans laquelle sont stockées des données décrivant un ensemble de chaussées connectées comportant chacune une ou plusieurs voies, d'une pluralité de voies candidates pour le routage du VA ;
l'extraction (620), dans la base de données cartographique, d'au moins un paramètre de chaque voie de la pluralité de voies candidates ;
la détermination (630) d'une mesure de performance pour chaque voie de la pluralité de voies candidates, la mesure de performance pour une voie candidate donnée étant effectuée sur la base dudit au moins un paramètre extrait de la voie candidate donnée ; et
la sélection (640) d'une voie candidate parmi la pluralité de voies candidates pour router le VA sur la base au moins en partie des mesures de performance pour la pluralité de voies candidates,
dans lequel la mesure de performance pour une voie reflète une performance de conduite attendue du véhicule lors d'une navigation autonome dans la voie, et
**caractérisé en ce que** la détermination de la mesure de performance pour une voie candidate donnée comprend :
l'identification, sur la base dudit au moins un paramètre pour la voie candidate donnée, d'un groupe de voies comprenant la voie candidate donnée et au moins une voie non candidate, ladite au moins une voie non candidate ayant un paramètre correspondant à au moins l'un des paramètres de la voie candidate donnée ; et
la détermination de la mesure de performance du groupe de voies, la mesure de performance étant basée sur des données décrivant des trajets précédents effectués par des VA dans les voies non candidates du groupe de voies.

2. Procédé selon la revendication 1, dans lequel la pluralité de voies candidates comprend au moins deux voies adjacentes sur une chaussée, et dans lequel la sélection d'une voie candidate comprend la sélection d'une voie desdites au moins deux voies adjacentes sur la chaussée dans laquelle doit circuler le VA.

3. Procédé selon la revendication 1, dans lequel la pluralité de voies candidates comprend une première voie sur une première chaussée et une deuxième voie sur une deuxième chaussée, et la sélection d'une voie candidate comprend :
la sélection de la première voie sur la première chaussée ; et
la détermination d'un itinéraire pour le VA d'une origine à une destination, l'itinéraire comprenant la première voie sur la première chaussée.

4. Procédé selon la revendication 1, dans lequel ledit au moins un paramètre comprend un attribut d'un environnement de la voie candidate donnée, l'attribut décrivant une obstruction visuelle ou une obstruction physique associée à la voie candidate.

5. Procédé selon la revendication 1, dans lequel ledit au moins un paramètre comprend une manoeuvre autorisée du véhicule sur la voie candidate donnée et une mesure d'une caractéristique géométrique de la voie candidate donnée.

6. Procédé selon la revendication 1, dans lequel ledit au moins un paramètre comprend une mesure de l'utilisation de la voie candidate donnée, la mesure étant déterminée sur la base de données reçues d'une pluralité de VA circulant sur la voie candidate donnée.

7. Procédé selon la revendication 1, dans lequel le groupe de voies est déterminé par un algorithme d'apprentissage automatique, l'algorithme d'apprentissage automatique étant configuré pour déterminer, sur la base de données de conduite historiques décrivant des trajets précédents par les VA, que les voies présentant ledit au moins un paramètre ont des performances similaires à celles d'au moins un autre groupe de voies partageant au moins un autre paramètre.

8. Procédé selon la revendication 1, comprenant en outre :
pour une voie de la pluralité de voies candidates, l'extraction, dans la base de données cartographique, de données décrivant au moins une voie adjacente à la voie candidate, les données extraites comprenant au moins une donnée parmi le type de voie, la largeur de voie, la direction de circulation et le débit de circulation ; et
la détermination de la mesure de performance pour la voie candidate, basée en outre sur les données décrivant ladite au moins une voie adjacente à la voie candidate.

9. Procédé selon la revendication 1, dans lequel la mesure de performance est une probabilité qu'un conducteur de sécurité dans le VA effectue une commande manuelle sur le VA pendant que le VA se déplace dans la voie candidate.

10. Procédé selon la revendication 1, dans lequel la mesure de performance est une mesure parmi une probabilité que le VA subisse une collision alors qu'il se déplace dans la voie candidate, et une mesure décrivant un niveau de confort d'un passager dans le VA.

11. Procédé selon la revendication 1, comprenant en outre :
la planification d'un trajet pour le VA sur la base dudit au moins un paramètre de la voie candidate sélectionnée, le trajet comprenant une vitesse du VA et une position du VA dans la voie candidate sélectionnée ; et
la manoeuvre du VA dans la voie candidate sélectionnée selon le trajet prévu.

12. Procédé selon la revendication 1, comprenant en outre :
la détermination du fait que la voie candidate sélectionnée présente une mesure de performance inférieure à une mesure de performance seuil ;
l'identification d'un paramètre de la voie candidate sélectionnée contribuant au fait que la mesure de performance est inférieure à la mesure de performance seuil ; et
l'ajustement d'un réglage d'un module de perception du VA sur la base du paramètre identifié.

13. Procédé selon la revendication 1, comprenant en outre :
la détermination du fait que la voie candidate sélectionnée a une mesure de performance inférieure à une mesure de performance seuil ; et
en réponse à la détermination, l'affichage d'une alerte à un opérateur concernant la mesure de performance de la voie candidate sélectionnée.

14. Support non volatile lisible par un ordinateur sur lequel sont stockées des instructions de sélection d'un itinéraire pour un véhicule autonome, VA, dans lequel les instructions, lorsqu'elles sont exécutées par un processeur, commandent au processeur de mettre en œuvre le procédé selon l'une quelconque des revendications précédentes 1 à 13.
